# EUROPÄISCHE PATENTSCHRIFT

(11) **EP 0 412 229 B1**
(45) Veröffentlichungstag und Bekanntmachung des Hinweises auf die Patenterteilung: **08.06.1994**
(21) Anmeldenummer: 90100268.3
(22) Anmeldetag: 08.01.1990
(51) Int. Cl.: F16K 1/226

(54) **Temperaturbeständige Dichtanordnung eines Drehklappenventils**
Thermally stable sealing device for a butterfly valve
Dispositif d'étanchéité stable en température pour vanne papillon

(30) Priorität: 10.08.1989 US 392247
(43) Veröffentlichungstag der Anmeldung: 13.02.1991
(73) Patentinhaber: ADAMS GmbH & Co. ARMATUREN KG, D-44653 Herne (DE)
(72) Erfinder: Adams, Horst Heinz, D-4630 Bochum 1 (DE); Brüggestrath, Bernd, D-4630 Bochum (DE); Kappe, Rudolf August, D-4370 Marl (DE)
(74) Vertreter: Finkener und Ernesti Patentanwälte

(56) Entgegenhaltungen:
- DE-A- 2 524 895
- DE-A- 3 800 705
- FR-A- 2 239 626
- FR-A- 2 429 946
- GB-A- 578 954
- US-A- 4 271 858

## Beschreibung

Die Erfindung bezieht sich auf eine Dichtanordnung eines Drehklappenventils und betrifft insbesondere eine zweiseitig oder auch einseitig wirksame Dichtung in einer Ausführung gemäß dem Oberbegriff des Patentanspruchs 1.

Eine Dichtanordnung dieser Art ist aus der DE-A 25 24 895 bekannt. Sie umfaßt zwei Gruppen von elastischen Dichtungsringen (Ringlamellen), wobei eine einzelne Ringlamelle einen radial von der Dichtflächenseite abgewandten gestreckten Einspannabschnitt und einen anschließenden, im Querschnitt etwa viertelkreisförmigen Bogenteil aufweist. Von den beiden Ringlamellen jeder Gruppe wirkt jeweils nur der Bogenteil der axial inneren Ringlamelle als Dichtungslippe. Die Krümmungsradien der beiden Bogenteile der Ringlamellen einer Gruppe stimmen im wesentlichen überein, so daß der Bogenteil der axial äußeren Ringlamelle ständig mit dem Bogenteil der axial inneren Ringlamelle in Kontakt steht und deren elastische Dichtkraft unterstützt.

Eine von der Funktion her ähnlich ausgebildete Dichtanordnung ist in der US-A-4 271 858 beschrieben. Ein Unterschied besteht allerdings darin, daß die Ringlamellen in jeder Gruppe im Anschluß an den Einspannabschnitt anstelle eines Bogenteils einen konus- bzw. trichterförmigen Abschnitt aufweisen. Auch bei dieser Dichtanordnung besteht zwischen den Konusteilen der Ringlamellen jeder Gruppe ständig Berührungsschluß. Das heißt, für die Dichtkraft ist während des Schließvorganges von Anfang an die Federkraft von beiden Ringlamellen maßgebend.

Die erzielbare Abdichtung bei Dichtanordnungen dieser Art hängt vom beabsichtigten Einsatz des Klappenventils ab. Die wichtigsten Parameter, die die Art der Gestaltung der Dichtanordnung bestimmen, sind folgende:
- Betriebsdruck bzw. -bereich des Strömungsmediums.
- Strömungsgeschwindigkeit bzw. -geschwindigkeitsbereich.
- Drehmoment für die Betätigung der Klappenscheibe.
- Maximal zulässige Leckage.
- Strömungsrichtung, d. h. uni- oder bidirektional.

Die bekannten Dichtanordnungen dieser Art berücksichtigen unterschiedliche Arten und Kombinationen der vorgenannten Parameter. Hinsichtlich einer optimalen Erfüllung aller wesentlichen Parameter sind die bekannten Dichtanordnungen noch nicht zufriedenstellend.

Die Aufgabe der Erfindung besteht darin, eine Dichtanordnung eines Drehklappenventils derart zu verbessern bzw. zu vervollkommnen, daß sie für die jeweils vorliegenden Betriebsbedingungen eine wirksame Abdichtungen über lange Zeiträume gewährleistet, selbst unter erschwerten Arbeitsbedingungen wie z. B. hohe Temperaturen des Betriebsmedium, hohe Druckunterschiede zwischen Anström- und Abströmseite usw. Zugleich soll die Dichtanordnung so beschaffen sein, daß sich Auswirkungen durch Wärmeschwankungen und Verschleiß selbsttätig ausgleichen.

Diese Aufgabe wird bei einer temperaturbeständigen Dichtanordnung der eingangs beschriebenen Art erfindungsgemäß dadurch gelöst, daß in jeder Gruppe der Krümmungsradius der radial inneren Bogenteile der Ringlamellen größer ist als der der radial äußeren Bogenteile, und daß ein jeder Gruppe zugehöriger Stützring mit einer abgerundeten Innenkante versehen ist, die sich bis an die Innenwandung des Bogenteils der dem Stützring benachbarten Ringlamelle erstreckt.

Die Anwendung von Dichtlamellen mit Bogenteilen mit unterschiedlichen Krümmungsradien hat zur Folge, daß in der Offenstellung des Ventils die Bogenteile nicht miteinander in Berührung stehen. Für die Funktion einer solchen Dichtanordnung sind dadurch wesentliche Vorteile erzielbar. So ermöglicht eine solche Ausbildung bei gleichen Werkstoffen der Ringlamellen eine größere Weichheit bei den radial inneren Bogenteilen, die in der Schließphase zuerst mit der starren Dichtfläche in Berührung treten. Der Andruck der Bogenteile gegen die starre Dichtfläche kann so von einem anfänglich geringeren Wert allmählich bis zum Endwert in der Schließstellung gesteigert werden. So wird u. a. ein unnötiger Verschleiß vermieden.

Gemäß einer weiteren Ausgestaltung der Erfindung bestehen die Ringlamellen aus nichtrostendem Stahl.

Die beiden Gruppen von Ringlamellen können auch jeweils aus einer unterschiedlichen Anzahl von Ringlamellen bestehen. So kann es vorteilhaft sein, unter Berücksichtigung einer Hauptströmungsrichtung in der betreffenden Gruppe drei gleichartige Ringlamelllen einzusetzen.

Nach einer weiteren vorteilhaften Ausgestaltung ist in jeder Gruppe zwischen zwei benachbarten Ringlamellen ein Zwischenring angeordnet. Der dadurch geschaffene Freiraum zwischen zwei benachbarten Ringlamellen vermeidet eine gegenseitige Beeinflussung und begünstigt so die freie Verformbarkeit jeder einzelnen Ringlamelle. Die Zwischenringe können aus Metall, Graphit oder einem elastomeren Material bestehen.

Eine andere vorteilhafte Weiterbildung besteht darin, daß die abgerundete Innenkante der Stützringe einen kleineren Kurvenradius als der Bogenteil der jeweils benachbarten Ringlamelle hat. Auch dies Maßnahme dient der Erhaltung einer größtmöglichen Verformbarkeit des Bogenteils, bevor die Stützfunktion durch den Stützring einsetzt.

Der Zusammenhalt des aus Ringlamellen und Zwischenringen gebildeten Stapels wird vorteilhafterweise durch einen Verspannungsring bewirkt, dessen Innenkante zugleich als Stützring dient.

Zur Erzielung optimaler Dichteigenschaften kann es vorteilhaft sein, die Ringlamellen innerhalb einer Gruppe in unterschiedlichen Stärken und/oder mit unterschiedlichen federelastischen Eigenschaften auszubilden. Auch können die Ringlamellen mit einem Überzug aus Kunststoff versehen sein.

Die Elemente der Dichtanordnung sind so beschaffen, daß Dichtfläche und Sitz in ihrer Anordnung am Gehäuse und an der Klappenscheibe ohne weiteres miteinander vertauschbar sind.

Ausführungsbeispiele von Dichtanordnungen gemäß der Erfindung sind in der Zeichnung schematisch dargestellt und werden nachfolgend erläutert. Es zeigt:
- Fig. 1: eine Teil-Schnittansicht einer Dichtanordnung in Verbindung mit einer Klappenscheibe mit Konus-Dichtfläche in der Schließstellung derselben,
- Fig. 2: eine Teil-Schnittansicht der Dichtanordnung nach Fig. 1, in einer Offenstellung der Klappenscheibe,
- Fig. 3: eine weitere Teil-Schnittansicht der Dichtanordnung nach Fig. 1, in der die Klappenscheibe kurz vor der Schließstellung steht,
- Fig. 4: eine Teil-Schnittansicht einer Dichtanordnung in einer Ausführung, bei der die federelastischen Ringlamellen an der Klappenscheibe angeordnet sind, und
- Fig. 5: eine Teil-Schnittansicht einer Dichtanordnung entsprechend der Fig. 1, jedoch für eine Klappenscheibe mit einer Kugelzone als Dichtfläche.

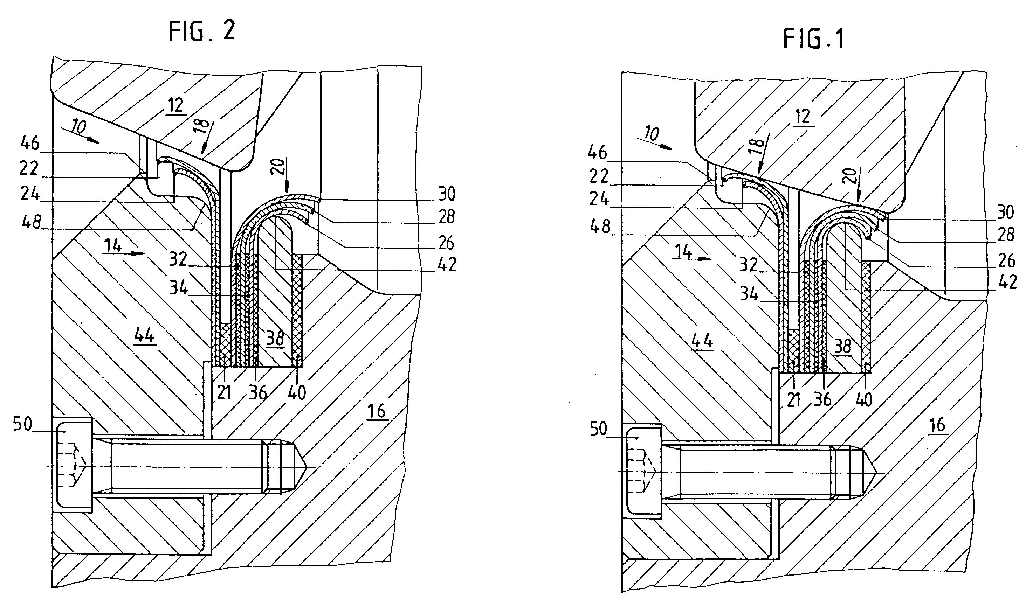

Fig. 1 zeigt die bevorzugte Ausführung der Erfindung in ihrer Anwendung an einem Drehklappenventil. Das Drehklappenventil (10) enthält eine Klappenscheibe (12) und eine Dichtanordnung (14) in einem Gehäuse (16). Die Klappenscheibe (12) kann an einem Ventilschaft angeordnet und mit einem Betätigungsorgan verbunden sein, wie es offenbart ist in der US-PS 4 231 546, oder in einer anderen bekannten Art ausgeführt sein.

Die Dichtanordnung (14) setzt sich zusammen aus zwei Gruppen von Ringlamellen (18 und 20), die durch einen Zwischenring (21) voneinander getrennt sind. Die Gruppe (18) enthält zwei Ringlamellen (22 und 24), von denen jede einen im wesentlichen linearen Abschnitt und einen gekrümmten Abschnitt als integralen Bestandteil des linearen radial äußeren Abschnitts aufweist. Vorzugsweise haben die Ringlamellen (22 und 24) unterschiedliche elastische Eigenschaften als Folge von unterschiedlichen Krümmungsradien der inneren Bogenteile, von unterschiedlichen Werkstoffen, von unterschiedlichen Stärken oder einer Kombination hiervon. Wie in Fig. 1 dargestellt ist, hat bei der Ringlamelle (22) der Bogenteil einen größeren Krümmungsradius als der Bogenteil der Ringlamelle (24). Somit unterscheiden sich die elastischen Eigenschaften der Ringlamelle (22) von denen der Ringlamelle (24).

Vorzugsweise sind die Ringlamellen (22 und 24) aus Metall wie beispielsweise nichtrostendem Stahl ausgebildet. Sie können einen Überzug aus Kunststoff aufweisen, um die Relativbewegung zwischen ihnen zu verbessern. Der mittlere Distanzring (21) besteht vorzugsweise aus Graphit, kann aber auch aus einem elastomeren Material bestehen, welches für das jeweilige Betriebsmedium des Ventils (10) geeignet ist.

Wie aus Fig. 1 ferner hervorgeht, besteht die Gruppe (20) aus drei elastischen Ringlamellen (26, 28 und 30), wobei die äußeren von der mittleren durch je einen Zwischenring (32 bzw. 34) voneinander getrennt sind. Wie bei den Ringlamellen (22 und 24) haben die Ringlamellen (26, 28 und 30) vorzugsweise unterschiedliche elastische Eigenschaften als Folge unterschiedlicher Krümmungsradien ihrer Bogenteile, unterschiedlicher Werkstoffe, unterschiedlicher Stärke oder einer Kombination hiervon. Der Bogenteil der Ringlamelle (30) hat einen größeren Krümmungsradius als der Bogenteil der Ringlamelle (28) und ebenso hat der Bogenteil der Ringlamelle (28) einen größeren Krümmungsradius als der Bogenteil der Ringlamelle (26). Somit sind die elastischen Eigenschaften dieser drei Ringlamellen verschieden.

Wie bei der Gruppe (18) bestehen die Ringlamellen der Gruppe (20) aus Metall wie beispielsweise nichtrostendem Stahl. Sie können ebenfalls einen Überzug aus Kunststoff aufweisen, um Relativbewegungen zwischen ihnen zu verbessern. Die Zwischenringe (32 und 34) bestehen vorzugsweise aus Graphit, können aber auch aus einem elastomeren Material bestehen, welches für das Betriebsmedium des Ventils (10) geeignet ist.

Ein Zwischenring (36), ein Stützring (38) und ein weiterer Zwischenring (40) trennen die Gruppe (20) vom Ventilgehäuse (16). Die Zwischenringe (36 und 40) können aus Graphit oder einem anderen geeigneten Material bestehen. Der Stützring (38) hat eine abgerundete Innenkante (42) mit einem kleineren Abrundungsradius als der Krümmungsradius des Bogenteils der Ringlamelle (26). Während der Schließstellung der Klappenscheibe (12) ruht der Bogenteil der Ringlamelle (26) auf der Innenkante (42) des Stützringes (38), wie es in Fig. 1 veranschaulicht ist.

Die Gruppen (18 und 20) der Dichtanordnung, der Stützring (38) und die vorerwähnten Zwischenringe sind am Ventilgehäuse (16) durch einen Haltering (44) gehalten. Am Haltering (44) sind eine Ringlippe (46) und eine abgerundete Schulter (48) an seinem inneren Umfang angeformt. Befestigt ist der Haltering (44) am Gehäuse (16) durch Schrauben (50) oder auf eine andere bekannte Art.

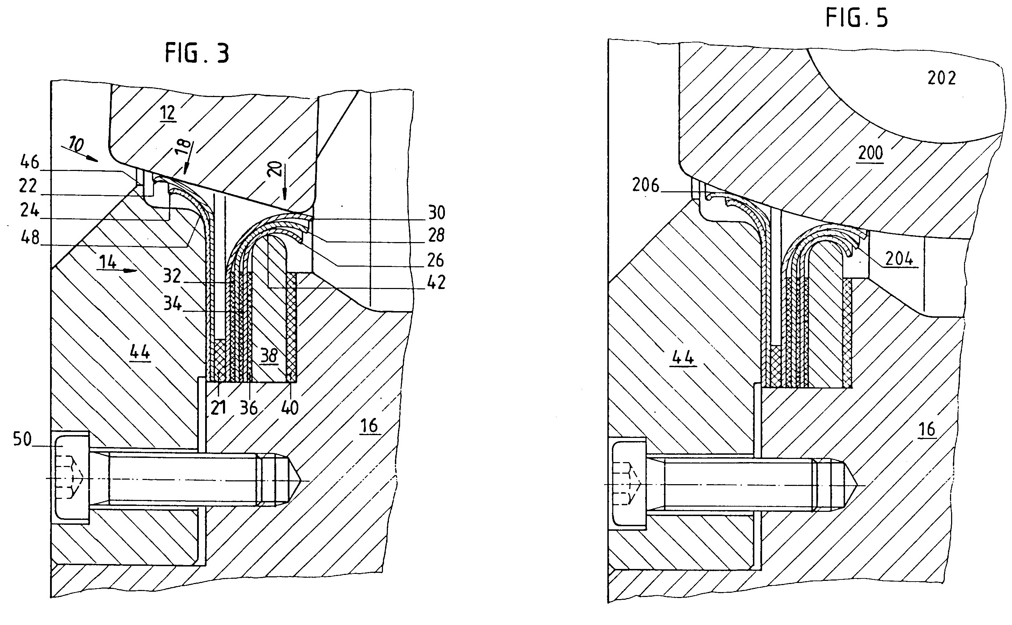

Eine Offenstellung der Klappenscheibe (10) zeigt Fig. 2. Die Bogenteile der Ringlamellen (22 und 24) bzw. (26, 28 und 30) sind entspannt und befinden sich in ihrem zur Mitte gestreckten Zustand. Mit Beginn des Schließens des Klappenventils beginnt der äußere Umfang der Klappenscheibe (12) die Bogenteile der Ringlamellen (22 und 30) radial nach außen zu drücken, wie dies in Fig. 3 dargestellt ist. Dabei drücken der Reihe nach der Bogenteil der Ringlamelle (22) den Bogenteil der Ringlamelle (24) und ferner der Bogenteil der Ringlamelle (30) den Bogenteil der Ringlamelle (28) sowie der Bogenteil der Ringlamelle (28) den Bogenteil der Ringlamelle (26) radial nach außen. Während ihrer radial auswärts gerichteten Spreizbewegung gleiten die Bogenteile der Ringlamellen gegeneinander. Die Bogenteile der Ringlamellen (22 und 24) schwenken um die Schulter (48) des Halteringes (44) und die Bogenteile der Ringlamellen (26, 27 und 30) schwenken um die Innenkante (42) des Stützringes (48). Dabei bewegen sich die Bogenteile der Ringlamellen in die in Fig. 1 gezeigten Stellungen, wenn die Klappenscheibe sich in der Schließstellung befindet.

Die kombinierten Federwirkungen der Ringlamellen (22 und 24) erzeugen einen mediumdichten Sitz gegen die starre Dichtfläche der Klappenscheibe (12). Befindet sich die Dichtanordnung der Gruppe (18) auf der Zuströmseite des Ventils (12), so drückt der Druck des Mediums gegen die Ringlamellen (22 und 24), insbesondere ihre Bogenteile, und unterstützt somit ihre Dichtkraft. In gleicher Weise erzeugt die kombinierte Federwirkung der Ringlamellen (26, 27 und 30) einen mediumdichten Sitz gegen die Dichtfläche der Klappenscheibe (12).

Befindet sich die Dichtanordnung der Gruppe (20) auf der Zuströmseite der Klappenscheibe (12), so drückt auch hier der Druck des Mediums gegen die Ringlamellen (26, 28 un 30) und erhöht dadurch ihre Dichtkraft. Das Ventil (10) ist insofern ein Ventil mit bidirektional wirkender Dichtanordnung, da die beiden Gruppen (18, 20) von Ringlamellen einen mediumdichten Sitz hervorrufen, unabhängig von der Strömungsrichtung des Betriebsmediums.

Die Dichtanordnung gemäß der Erfindung erlaubt Veränderungen der Ringlamellen und der zugehörigen Elemente zwecks Anpassung an die jweiligen Parameter des Strömungsmediums. Wie bereits erwähnt, können die elastischen Eigenschaften der Ringlamellen geändert werden, um eine mehr oder weniger große Dichtkraft gegen die Ventilscheibe zu erzeugen. Zusätzlich kann die Anzahl der Ringlamellen in den Gruppen (18 und 20) geändert werden. Die Stärke der Dichtanordnung (14) kann innerhalb ihrer gewählten Grenze gehalten werden durch Veränderung der Stärke und/oder Anzahl der Zwischenringe, um so Änderungen in der Stärke und/oder Anzahl der Ringlamellen auszugleichen.

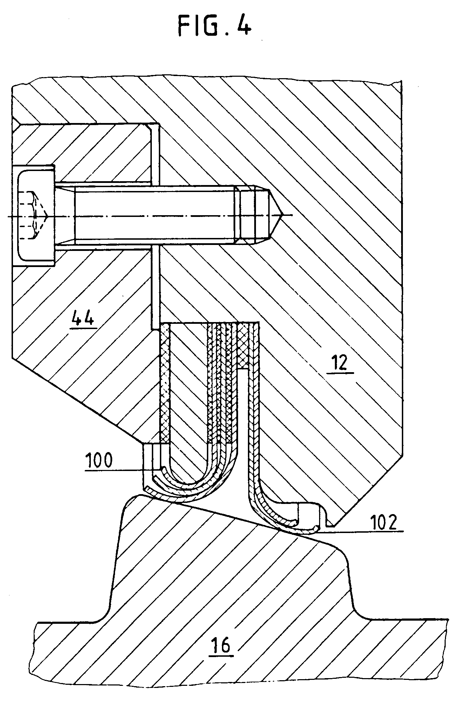

Während die vorstehend beschriebene bevorzugte Ausführungsform die Anordnung der Ringlamellen im Ventilgehäuse (16) zeigt, ist es ebenso möglich, die Ringlamellen an der Klappenscheibe (12) anzuordnen, wie dies in Fig. 4 dargestellt ist. Dichtanordnungen dieser Art sind beispielsweise bekannt aus den US-A-3 442 488, 3 532 321, 3 905 577 und 4 003 394. Die Klappenscheibe kann an ihrem Umfang Ringlamellen in einer einzigen Gruppe oder in zwei Gruppen (100 bzw. 102) enthalten, wie es in Fig. 4 dargestellt ist. Wie bei der eingangs erläuterten Dichtanordnung kann die Anzahl, die Stärke und der Krümmungsradius der Bogenteile der Ringlamellen geändert werden entsprechend den vorliegenden Parametern.

Es braucht nicht besonders betont zu werden, daß die beschriebene Dichtanordnung ebensogut für Kugelventile und andere Drehventile geeignet ist. Wie im Zusammenhang mit den vorstehend beschriebenen Dichtanordnungen erwähnt, kann die Anzahl, die Stärke und der Krümmungsradius der Bogenteile der Ringlamellen entsprechend den Parametern des Strömungsmediums geändert weden. Die Stärke der Dichtanordnung kann innerhalb ihrer gewählten Grenze gehalten werden durch Veränderung der Stärke und/oder der Anzahl der Zwischenringe, um so Änderungen in der Stärke und/oder Anzahl der Ringlamellen auszugleichen.

Ein Beispiel einer Anwendung der Dichtanordnung gemäß der Erfindung in einem Kugelventil ist in Fig. 5 dargestellt. Dabei ist der Verschlußkörper (200) mit einer starren Dichtfläche entsprechend einer Kugelzone in seiner Schließstellung gezeigt, während der Strömungsdurchgang (202) senkrecht zur Richtung der Strömung drehbar ist. Die Gruppen (204 und 206) der Ringlamellen sind am Ventilgehäuse (16) mittels eines Halteringes (44) gehalten.

## Patentansprüche

1. Temperaturbeständige bidirektionale Dichtanordnungen (14) eines Klappenventils (10) mit drehbarer Klappenscheibe (12) mit einer starren Dichtfläche entsprechend einer Konus- oder Kugelzone und einem Ventilsitz aus federelastischen Ringlamellen (22, 24 bzw 26, 28, 30), von denen eine einzelne Ringlamelle einen radial von der Dichtflächenseite abgewandten gestreckten Einspannabschnitt und einen anschließenden, im Querschnitt etwa viertelkreisförmigen Bogenteil aufweist, wobei der Ventilsitz aus wenigstens zwei Gruppen von Ringlamellen (18, 20) gebildet ist, deren Bogenteile einen axialen Abstand haben und voneinander weggerichtet sind, bei denen jede Gruppe (18, 20) wenigstens zwei gleichgerichtete Ringlamellen (22, 24 bzw 26, 28, 30) enthält und in jeder Gruppe die jeweils axial äußere Ringlamelle (24 bzw 26) in der Schließstellung des Ventils mit ihrem Bogenteil stützend am Bogenteil der benachbarten Ringlamelle (22 bzw 28) anliegt und wobei die Ringlamellen mit einem mittigen Distanzring (21) und wenigstens einem äußeren Stützring (44 bzw 38) als Stapel an einem Sitzträger verspannt sind, dadurch gekennzeichnet, daß in jeder Gruppe (18, 20) der Krümmungsradius der radial inneren Bogenteile der Ringlamellen (22, 24 bzw. 26, 28, 30) größer ist als der der radial äußeren Bogenteile und daß ein jeder Gruppe zugehöriger Stützring (44 bzw. 38) mit einer abgerundeten Innenkante (48 bzw. 42) versehen ist, die sich bis an die Innenwandung des Bogenteils der dem Stützring (44 bzw. 38) benachbarten Ringlamelle (24 bzw. 26) erstreckt.

2. Dichtanordnung nach Anspruch 1, dadurch gekennzeichnet, daß die Ringlamellen (22, 24 bzw. 26, 28 oder 30) aus nichtrostendem Stahl bestehen.

3. Dichtanordnung nach Anspruch 1 oder 2, dadurch gekennzeichnet, daß eine der beiden Gruppen (18 oder 20) von Ringlamellen drei gleichartige Ringlamellen (26, 28 und 30) enthält.

4. Dichtanordnung nach einem der Ansprüche 1 bis 3, dadurch gekennzeichnet, daß in einer Gruppe (18, 20) zwischen den Einspannabschnitten von zwei benachbarten Ringlamellen ein Zwischenring (32, 34) angeordnet ist.

5. Dichtanordnung nach Anspruch 4, dadurch gekennzeichnet, daß die Zwischenringe (32, 34) aus Metall, Graphit oder einem elastomeren Material bestehen.

6. Dichtanordnung nach einem der Ansprüche 1 bis 5, dadurch gekennzeichnet, daß die abgerundete Innenkante (48 bzw. 42) der Stützringe (44 bzw. 38) einen kleineren Krümmungsradius als der Bogenteil der jeweils benachbarten Ringlamelle (24 bzw. 26) hat.

7. Dichtanordnung nach einem der Ansprüche 1 bis 6, dadurch gekennzeichnet, daß ein zum Halten und Verspannen des Stapels am Gehäuse (16) dienender Verspannungsring (44) vorgesehen und mittels Schraubenbolzen (50) am Gehäuse (16) verspannbar ist, dessen Innenkante (48) zugleich als Stützring dient.

8. Dichtanordnung nach einem der Ansprüche 1 bis 7, dadurch gekennzeichnet, daß die Ringlamellen innerhalb einer Gruppe (18, 20) eine unterschiedliche Stärke und/oder unterschiedliche federelastiche Eigenschaften haben.

9. Dichtanordnungen nach einem der Ansprüche 1 bis 8, dadurch gekennzeichnet, daß die Ringlamellen einen Überzug aus Kunststoff aufweisen.

## Claims

1. Temperature-resistant bidirectional sealing arrangements (14) of a flap valve (10) with a swivellable flap disc (12) having a rigid sealing surface corresponding to a conical or spherical zone and a valve seating composed of spring-elastic annular laminae (22 and 24 or 26, 28 and 30), of which one single annular lamina has an elongated clamping section turned away radially from the sealing surface side and a connecting curved part which is roughly quadrant-shaped in cross-section, wherein the valve seat is formed from at least two groups of annular laminae (18 and 20) whose curved parts have an axial spacing and are pointed away from each other, in which each group (18 and 20) comprises at least two undirected annular laminae (22 and 24 or 26, 28 and 30) and in each group the axially outer annular lamina (24 or 26) in each case, in the closing position of the valve, butts with its curved part in a back-up manner against the curved part of the adjacent annular lamina (22 or 28), and wherein the annular laminae, with a central spacer (21) and at least one outer back-up ring (44 or 38), are clamped as a stack on a seat support, characterized in that in each group (18 and 20) the radius of curvature of the radially inner curved parts of the annular laminae (22 and 24 or 26, 28 and 30) is larger than that of the radially outer curved parts, and that one back-up ring (44 or 38) belonging to each group is provided with a rounded-off inner edge (48 or 42) which extends as far as the inner wall of the curved part of the annular lamina (24 or 26) which is adjacent to the back-up ring (44 or 38).

2. Sealing arrangement as claimed in Claim 1, characterized in that the annular laminae (22 and 24 or 26, 28 or 30) are composed of non-rusting steel.

3. Sealing arrangement as claimed in Claim 1 or Claim 2, characterized in that one of the two groups (18 or 20) of annular laminae contains three similar annular laminae (26, 28 and 30).

4. Sealing arrangement as claimed in one of the Claims 1 to 3, characterized in that in one group (18 and 20) an intermediate ring (32 and 34) is arranged between the clamping sections of two adjacent annular laminae.

5. Sealing arrangement as claimed in Claim 4, characterized in that the intermediate rings (32 and 34) are composed of metal, graphite or an elastomeric material.

6. Sealing arrangement as claimed in one of the Claims 1 to 5, characterized in that the rounded-off inner edge (48 or 42) of the back-up rings (44 or 38) has a smaller radius of curvature than the curved part of the adjacent annular lamina (24 or 26) in each case.

7. Sealing arrangement as claimed in one of the Claims 1 to 6, characterized in that a clamping ring (44) which serves to retain and clamp the stack on the housing (16) is provided and can be clamped by means of screw bolts (50) on the housing (16), whose inner edge (48) serves at one and the same time as a back-up ring.

8. Sealing arrangement as claimed in one of the Claims 1 to 7, characterized in that the annular laminae have a different thickness and/or different spring-elastic properties within one group (18 and 20).

9. Sealing arrangement as claimed in one of the Claims 1 to 8, characterized in that the annular laminae have a plastic coat.

## Revendications

1. Dispositif d'étanchéité (14) bidirectionnel et thermiquement stable, pour une vanne papillon (10) à disque obturateur rotatif (12), présentant une surface rigide d'étanchement correspondant à une zone conique ou sphérique, et un siège d'obturation constitué de lamelles annulaires élastiques (22, 24, respectivement 26, 28, 30) parmi lesquelles une lamelle annulaire individuelle comprend une région rectiligne d'enserrement, tournée radialement à l'opposé du côté surface d'étanchement, et une partie curviligne contiguë, de section transversale sensiblement configurée en quart de cercle ; dispositif dans lequel le siège d'obturation est formé d'au moins deux groupes de lamelles annulaires (18, 20) dont les parties curvilignes sont distantes axialement et sont orientées à l'écart les unes des autres, groupes dont chacun (18, 20) renferme au moins deux lamelles annulaires (22, 24, respectivement 26, 28, 30) dirigées dans le même sens et, dans chaque groupe, la lamelle annulaire respective (24, respectivement 26) axialement extérieure est appliquée, dans la position de fermeture de la vanne, en prenant appui par sa partie curviligne, contre la partie curviligne de la lamelle annulaire (22, respectivement 28) voisine ; et dans lequel les lamelles annulaires sont bloquées sur un support de siège, sous la forme d'un empilement, avec une bague centrale d'espacement (21) et au moins une bague extérieure d'appui (44, respectivement 38), caractérisé par le fait que, dans chaque groupe (18, 20), le rayon de courbure des parties curvilignes radialement intérieures des lamelles annulaires (22, 24, respectivement 26, 28, 30) est plus grand que celui des parties curvilignes radialement extérieures ; et par le fait qu'une bague d'appui (44, respectivement 38), faisant partie de chaque groupe, est pourvue d'une arête interne arrondie (48, respectivement 42) s'étendant jusqu'à la paroi interne de la partie curviligne de la lamelle annulaire (24, respectivement 26) voisine de la bague d'appui (44, respectivement 38).

2. Dispositif d'étanchéité selon la revendication 1, caractérisé par le fait que les lamelles annulaires (22, 24, respectivement 26, 28 ou 30) consistent en de l'acier inoxydable.

3. Dispositif d'étanchéité selon la revendication 1 ou 2, caractérisé par le fait que l'un des deux groupes (18 ou 20) de lamelles annulaires renferme trois lamelles annulaires (26, 28 et 30) de même type.

4. Dispositif d'étanchéité selon l'une des revendications 1 à 3, caractérisé par le fait qu'une bague intercalaire (32, 34) est disposée, dans un groupe (18, 20), entre les régions d'enserrement de deux lamelles annulaires voisines.

5. Dispositif d'étanchéité selon la revendication 4, caractérisé par le fait que les bagues intercalaires (32, 34) consistent en un métal, en du graphite ou en un matériau élastomère.

6. Dispositif d'étanchéité selon l'une des revendications 1 à 5, caractérisé par le fait que l'arête interne arrondie (48, respectivement 42) des bagues d'appui (44, raspectivement 38) présente un plus petit rayon de courbure que la partie curviligne de la lamelle annulaire (24, respectivement 26) respectivement voisine.

7. Dispositif d'étanchéité selon l'une des revendications 1 à 6, caractérisé par le fait qu'il est prévu une bague de blocage (44) qui sert à la retenue et au blocage de l'empilement sur le carter (16), et peut être bloquée sur ledit carter (16) au moyen de boulons (50), bague dont l'arête interne (48) sert simultanément de bague d'appui.

8. Dispositif d'étanchéité selon l'une des revendications 1 à 7, caractérisé par le fait que les lamelles annulaires présentent, à l'intérieur d'un groupe (18, 20), une épaisseur différente et/ou des propriétés élastiques différentes.

9. Dispositif d'étanchéité selon l'une des revendications 1 à 8, caractérisé par le fait que les lamelles annulaires comportent un revêtement en matière plastique.
